Europäisches Patentamt

European Patent Office

Office européen des brevets

(19)

(11) Veröffentlichungsnummer: **0 117 010 B1**

(12) # EUROPÄISCHE PATENTSCHRIFT

(45) Veröffentlichungstag der Patentschrift:
24.05.89

(51) Int. Cl.⁴: **F 16 L 47/00,** B 29 C 45/00, B 29 D 23/00

(21) Anmeldenummer: 84200227.1

(22) Anmeldetag: 17.02.84

(54) Dickwändiges Formstück, Spritzgiessverfahren eines dickwändigen Formstücks und Vorrichtung mit Matrize zur Durchführung dieses Verfahrens.

(30) Priorität: 18.02.83 NL 8300621
18.02.83 NL 8300622
18.02.83 NL 8300623

(43) Veröffentlichungstag der Anmeldung:
29.08.84 Patentblatt 84/35

(45) Bekanntmachung des Hinweises auf die Patenterteilung:
24.05.89 Patentblatt 89/21

(84) Benannte Vertragsstaaten:
AT BE CH DE FR GB IT LI LU NL SE

(56) Entgegenhaltungen:
EP-A- 0 071 188
DE-A- 1 964 165
DE-A- 2 612 369
DE-B- 1 138 210
FR-A- 1 138 605
FR-A- 1 151 036
FR-A- 1 330 644
FR-A- 2 144 710
FR-A- 2 159 231
FR-A- 2 318 728
FR-A- 2 319 477
FR-A- 2 401 759

(73) Patentinhaber: WAVIN B.V., Händellaan 251, NL-8031 EM Zwolle (NL)

(72) Erfinder: Van der Vijgh, Roelof, Meppelerdiep 102, NL-8032 Zwolle (NL)

(74) Vertreter: van der Veken, Johannes Adriaan et al, EXTERPATENT B.V. P.O. Box 90649, NL-2509 LP 's-Gravenhage (NL)

(56) Entgegenhaltungen: (Fortsetzung)
GB-A- 577 373
US-A- 3 733 161
US-A- 4 366 110

J. RUBIN: "Injection molding", 1972, Seiten 251-259, John Wiley & Sons, New York, USA

## Beschreibung

Die Erfindung bezieht auf ein Formstück aus Kunststoff wie Polyalken insbesondere ein Kupplungsstück für thermoplastische Rohre.

Derartige Formstücke sind allgemein bekannt.

Zur Förderung von Flüssigkeiten werden immer mehr Rohre aus Kunststoff angewendet. Diese Rohre werden mit Kupplungsstücken, in der Form von T-Stücken, Erweiterungsstücken usw. zusammengekuppelt. Für Rohre mit entsprechend kleinem Durchmesser und mit kleiner Wandstärke gibt die Herstellung der Kupplungsstücke keine Probleme und diese können leicht in Spritzgießmatrizen gepreßt werden. Wenn aber Rohre mit großem Durchmesser und mit großer Wandstärke verwendet werden sollen, veranlaßt die Herstellung der Kupplungsstücke verschiedene Schwierigkeiten. Beim Spritzgießen oder beim Spritzpressen zeigen sich in der Wandung Umbildungen, Schrumpfblasen und Senkungen dem Materialschrumpf zufolge. Zur Erhaltung einer genügenden Festigkeit soll deshalb ein Werkstoffzusatz gegeben werden. Der unregelmäßige Schrumpf verursacht unzulässige Abweichungen in der Maßführung was eine Nachbearbeitung, zum Beispiel mittels Ausdrehen der Muffenenden notwendig macht, wodurch die chemisch hoch-widerstandsfähige Oberflächenschicht entfernt wird.

Die Erfindung bezweckt ein Formstück aus thermoplastischem Kunststoff wie Polyalken, insbesondere ein Kupplungsstück für Rohre zu schaffen, daß für Chemikalien die in der Umgebung vorhanden sind, gut widerstandsfähig ist und keine Nachbearbeitungen notwendig macht und deshalb also keine übermäßige Wandstärke braucht. Nach der Erfindung ist ein Formstück dadurch gekennzeichnet, daß das Formstück eine in der Hauptsache konstante große Wandstärke aufweist und daß die Wandung an der inneren wie an der äußeren Seite eine integrierte Oberflächenschicht aufweist von dem gleichen Kunststoff wie die Wandung selbst aber mit einer feineren Kristallverteilung und daß die Oberflächenschicht außerhalb an der Anspritzstelle glatt und geschlossen ist.

Dies ist vorteilhaft da das Formstück eine größere Widerstand gegen chemischem Angriff hat und verschleißfest ist, während das Formstück eine geringere Zerstörung der Mediumströmung in dem Rohr verursacht.

Bezüglich der Erfindung wird gewiesen auf EP-A-0 071 188. In dieser Anmeldung ist ein dickwändiges Formstück aus thermoplastischem Kunststoff bekannt, dessen Wandung an der inneren und an der äußeren Seite eine Oberflächenschicht aus dem gleichen Kunststoff wie das Innere der Wandung des Rohres aufweist.

Angegeben ist aber daß die verschiedenen Schichten des beschriebenen Formstücks trennbar sind weil in das erfindungsgemäßen Formstück die beiden Oberflächenschichten mit dem Wandungskern integriert sind und auch die beiden Oberflächenschichten eine feinere Kristallverteilung wie der Kunststoff des Wandungskerns aufweisen.

EP-0 071 188 betrifft deshalb ein Verfahren zur Herstellung eines Formstücks, aber mit der Absicht um mittels trennen der Schichten dünne Filme herzustellen.

In einer weiteren Ausführung ist das Formstück derart, daß die Wandungsstärke wenigstens 6 mm beträgt und das Diese über das ganze Erzeugnis konstant ist. Weiter hat das Formstück nach der Erfindung einen Wandungskern, der von Oberflächenschichten mit feinerer Kristallverteilung umgeben, homogen und voll massiv ist.

Die Erfindung betrifft ebenfalls ein Spritzgießverfahren dickwändiger Formstücke aus Kunststoff in einer Spritzgießmatrize, wobei der Kunststoff mit geringem Druck in plastischem Zustand in die Matrize hinein injiziert wird, wonach unter Beibehaltung der Zufuhr, der Druck etwas erhöht wird, während der Kühlung des in der Formmulde injizierten Kunststoffs. Beim Spritzgießen von Formstücken mit geringerer Wandstärke, z. B. eine Wandstärke von 2 bis 5 mm, entstehen mit Bezug auf die Endgestaltung des Erzeugnisses, keine Probleme da hierbei hohe Drucke angewendet werden, die hohe Schließkräfte der Matrizenhälften notwendig machen. Die Abkühlung findet in der Matrize statt und der zufolge dessen erstandene Schrumpf wird von dem Kern abgefangen. Einsenkungen des Werkstoffs in den Wänden der Materialschrumpf zufolge kommen bei diesen hohen Drucken praktisch nicht vor, während der ganze Abkühlung in der Matrize zufolge kaum Formänderungen wegen Schrumpf auftreten. Bei der Herstellung dickwändiger Formstücke ist nicht nur der Abfüllgrad der Formmulde unter Kontrolle zu halten, aber auch das Temperaturverhalten des zu injizierenden Kunststoffs.

Im Buch «Grundzüge der Spritzgießtechnik» von Walter Mink, dritter Auflage, 1966 von Zechner & Hüthig Verlag GmbH in Speyer, Wien und Zürich ist auf Seiten 251 bis 254 angedeutet worden in welcher Weise die Preßdrucke genau reguliert werden können und in welcher Weise der Abfüllgrad einer Formmulde für ein dickwändiges Formstück im Zaum gehalten werden kann.

Im allgemeinen soll der zu verarbeitende Kunststoff sehr heiß, bis anbei der chemischen Zersetzungstemperatur sein um den Kunststoff in sehr plastischem Zustand in die Matrizenmulde hineinführen zu können. Weiter ist auf den betreffenden Seiten angedeutet, daß das Spritzgießen mit einer niedrigen Strömungsgeschwindigkeit durchzuführen ist als wenn dünnwändige Formstücke gespritz würden. Das mit kleiner Strömungsgeschwindigkeit Einspritzen, wodurch das Abfüllen der Form gleichmäßig und langsam geschieht, würde die Bildung einer rauhen ungleichmäßigen Oberfläche, sowie die Bildung von Gußblasen und Rißbildung, vorbeugen. Weiter ist mit Bezug auf den großen Schrumpf des Kunststoffs während der Kühlung, einen Druck höherer Wert zubeibehalten vergleichbar mit dem Druck, die beim Spritzgießen dünnwändiger Formstücke gebraucht wird. Trotz dieser Richtlinien war es immer schwierig Formstücke, die qua Maßführung innerhalb der erforderten Herstellungstoleranzen liegen sollen, herzustellen und dem Formstück ein glattes Ansehen ohne Einsenkungen und Schrumpfblasen zu geben.

Die Erfindung bezweckt deshalb auch das Spritzgießen dickwändiger Formstücke zu ermöglichen ohne daß die genannten Nachteile auftreten und nach der Erfindung wird dies erreicht mit einem neuen Verfahren das darin besteht, daß das in der Formmulde der Matrize Hineininjizieren des Kunststoffs in drei Phasen durchgeführt wird, wobei in der ersten Phase Kunststoff mit höher Strömungsgeschwindigkeit in die Formmulde hinein injiziert wird, in einer zweiten Phase der Kunststoff mit niedriger Strömungsgeschwindigkeit und niedrigem Druck hinein gefördert wird und in einer dritten Phase, die Endphase des Füllens bei schon ganz gefüllter Formmulde, die Zufuhr von Kunststoff in sehr plastischem Zustand beibehalten wird unter höherem jedoch für Spritzgießen immer noch niedrigem Druck. Während dieser Endphase wird das Formstück teilweise abgekühlt.

Dies hat den Vorteil, daß während der Kühlung der Wandung das Materialvolumen in der Matrizenmulde gleich bleibt, damit keine Schrumpfblasen entstehen.

In Bezug auf dieses erfindungsgemäßen Verfahren wird auf GB-1 381 639 hingewiesen, wo ein Verfahren des betroffenen Typs beschrieben wird. In diesem bekannten Verfahren wird eine Formmulde zunächst gefüllt unter beibehaltung einer laminaren Strömung mit geringer Strömungsgeschwindigkeit, wonach unter beibehaltung der Zufuhr der Druck etwas erhöht wird.

Das erfindungsgemäße Verfahren ist aber ein Verfahren in dem keine spezielle Maßnahmen genommen sind um eine Laminarströmung zu gewährleisten; in die Anfangsphase der Füllung des Muldes wird mit hoher Füllgeschwindigkeit gearbeitet für eine möglichst schnelle Füllung, auch in der zweiten und dritten Phase wird nicht speziell Laminarströmung angestrebt.

Das neue Verfahren nach der Erfindung besteht darum auch darin, daß ein Strom aus flüssigem Kunststoff zwischen der Spritzvorrichtung und dem Wandungskern des Formstücks unter erhöhtem aber entsprechend niedrigem Druck erhalten wird, bis Erstarrung des Wandungskerns durch Kühlung auftritt. Das Formstück wird vorzugsweise hiernach gewaltsam gekühlt. Dies kann erfolgen indem das Formstück nach dem ersten Kühlperiode während der immer noch Material hinzugeführt wird, hiernach aus der Matrize entfernt wird und beispielsweise mit Kühlflüssigkeit nachgekühlt wird in einer zweiten Kühlperiode. Es ist bedeutend, daß die Produkthaut zwischen den zwei Kühlperioden nicht wieder anwärmt. Weiter wird ein dickwändiges Formstück, daß genau innerhalb die Fertigungstoleranzen liegen soll, erhalten indem das Formstück eventuell zusammen mit Teilen der formbestimmenden Unterteile der Spritzgießmatrize aus dieser Matrize entfernt wird und in einer Kühlflüssigkeit hinein getaucht wird bis der Wandungskern des Formstücks eine Temperatur erreicht hat, die fat mit der Umgebungstemperatur übereinstimmt.

Die Erfindung bezieht sich ebenfalls auf eine Vorrichtung zur Durchführung des neuen Verfahrens und diese Vorrichtung umfaßt eine Spritzgießmatrize und eine Vorrichtung zum Erhitzen und Hinzuführen des Kunststoffs. Um nun ganz den neuen Verfahren entsprechend dickwändige Formstücke mit dieser Vorrichtung herstellen zu können, ist die Vorrichtung nach der Erfindung dadurch gekennzeichnet, daß zwischen wenigstens einer Einspritzöffnung der Formmulde der Matrize und der Spritzgießvorrichtung für jede Einspritzöffnung eine Spritzbuchse angeordnet ist, welche Spritzbuchse einen so großen Durchmesser hat, daß der plastische Kunststoff in dieser Einspritzung erst gleichzeitig mit dem Kern der Wandung einfriert, so daß ohne zusätzlichen hohen Druck die Formmulde bis zum Schluß gefüllt bleibt. Nötigenfalls kann die Einspritzbuchse mit Heizungselementen oder mit einem Heizungselement versehen werden. Weiter ist eine Vorrichtung zur Durchführung des Verfahrens derart ausgeführt, daß die Formmulde der Matrize die Gestalt des Formstücks bestimmende Formteile und/oder Kernteile enthält und das wenigstens ein Teil deren aus der Matrize entfernbar und zusammen mit dem Formstück einem Kühlbad hinzu förderbar ist. Es ist hierbei möglich um unmittelbar die Form- oder Kernteile, die aus entsprechend hochwertigen formfesten Materialien bestehen können, an der von dem Formstück abgewendeten Seite mit einem Kühlmedium in Berührung zu halten ohne daß zuerst eine große Entfernung über wärmeübertragendem Material durchquert werden muß. Das Entfernen des Formstücks aus der Matrize hat weiter den Vorteil, daß das Formstück schnell bis auf eine niedrige Temperatur gekühlt werden kann. Außerdem kann mit einem zweiten Satz von Form- oder Kernteilen der Produktionszyklus weitergeführt werden, sodaß die Produktion erhöht wird.

Es wird bemerkt, daß aus der niederländischen Patentanmeldung 7 311 557 es an und für sich bekannt ist gespritzte, vorzugsweise dickwändige Formstücke aus einer Matrize zu entfernen und diese außerhalb der Matrize teilweise auf Kerne ganz abkühlen lassen. Hierbei werden zwei Sätze von Kernen verwendet, wobei einer Satz in der Matrize und einen anderen Satz außerhalb der Matrize abwechselnd gebraucht werden. Es handelt sich hierbei hauptsächlich um eine Verkürzung des Spritzvorgangs und nicht um eine höhere Füllung der Matrizenmulde zu erhalten.

Das Spritzgießen von Formstücken, insbesondere dickwändiger Kupplungsstücke kann aber noch beträchtlich billiger durchgeführt werden, wenn die Matrizenkosten herabgesetzt werden können.

Nach der Erfindung ist dies möglich mit einer Matrize, die dadurch gekennzeichnet ist, daß die die Formmulde umschließenden Matrizenteile aus einem wärmeleitenden gießbaren Werkstoff mit relativ geringerer Festigkeit hergestellt sind, in welchem gießbaren Werkstoff eine Armierung eingebettet ist wovon wenigstens einen Teil an die Gestaltung der Formmulde angepaßt worden ist. Das Besondere hierzu ist, daß das Gießen der Matrizenteile ein sehr wirtschaftliches Herstellungsverfahren ist und es möglich ist ein Kühlkanälensystem derart in die Matrizenteile anzuordnen, daß die Kühlung des Spritzgußerzeugnis optimal geschieht was insbesondere für dickwändige Formstücke von großer Bedeutung ist. Wenigstens einen Teil der Armierung kann aus für Gießen widerstandsfähigem Rohrmaterial hergestellt werden, wovon wenigstens ein Teil als Kühlkanal ausgeführt ist und an das Kühlsystem der Spritzgießvorrichtung anschließbar ist. In einer Stahlmatrize sollen die Kühlkanäle ja eingebohrt werden, sodaß keine um die Formmulde herum liegende gebogene Kanäle angewendet werden können. Der aus Rohrmaterial bestehende Teil der Armierung kann genau der Gestaltung der Formmulde entsprechend modelliert werden und beim Gießen im Werkstoff der Matrizenteile eingegossen werden.

Da der wärmeleitende gießbare Werkstoff eine ziemliche geringe Festigkeit haben kann, sind die Matrizenteile z. B. hergestellt aus einem gegossenen wärmeleitenden Epoxyharz oder aus Gußaluminium.

Es ist hierbei möglich stellenweise die Wandung der Formmulde mit einer Einlage oder Verkleidung aus einem Werkstoff mit größerer Festigkeit als die des gegossenen Werkstoffs zu versehen. Bei der Anwendung dieser Verkleidung sind Kühlkanäle von diesem abgedeckt was besonders von Bedeutung ist wenn dickwändige Formstücke gespritzt werden sollen, die eine optimale Kühlung brauchen.

Die Erfindung wird an Hand der beigelegten Zeichnung eingehender erläutert: worin:

Fig. 1 einen Schnitt durch einen Teil einer Spritzgießmatrize mit einem Teil einer Spritzvorrichtung ausgeführt zum Spritzgießen dickwändiger Formstücke;

Fig. 2 eine Seitenansicht eines dickwändigen Formstücks, daß in einem hierzu bestimmten Bad gekühlt oder abgeschreckt wird;

Fig. 3 im kleineren Maßstab die Kernteile nach Fig. 2 angeordnet in einer Matrizenhälfte angedeutet in schematischer Form;

Fig. 4 ebenfalls in schematischer Form die Kernteile nach Fig. 3 in einer Kühlwanne der Anlage wie in Fig. 2;

Fig. 5 einen Schnitt durch, bei einer Matrize nach Fig. 1 gehörenden Kanälen;

Fig. 6 eine schematische Darstellung des Herausziehens der Kernteile;

Fig. 7 einen Schnitt durch eine Matrize nach der Erfindung in einer besonderen Ausführungsform mit Teilen einer Spritzgießanlage ebenfalls nach der Erfindung;

Fig. 8 eine perspektivische Darstellung eines Formstücks insbesondere eines T-Kupplungsstücks nach der Erfindung; und

Fig. 9 eine mit einer Strukturphotographie vergleichbare Zeichnung eines Schnittes des Wandteiles eines Kunststofformstücks nach der Erfindung, zeigt.

Das Kupplungsstück nach der Erfindung wird beschrieben nach Erläuterung des Verfahrens und der Vorrichtung zur Durchführung dieses Verfahrens.

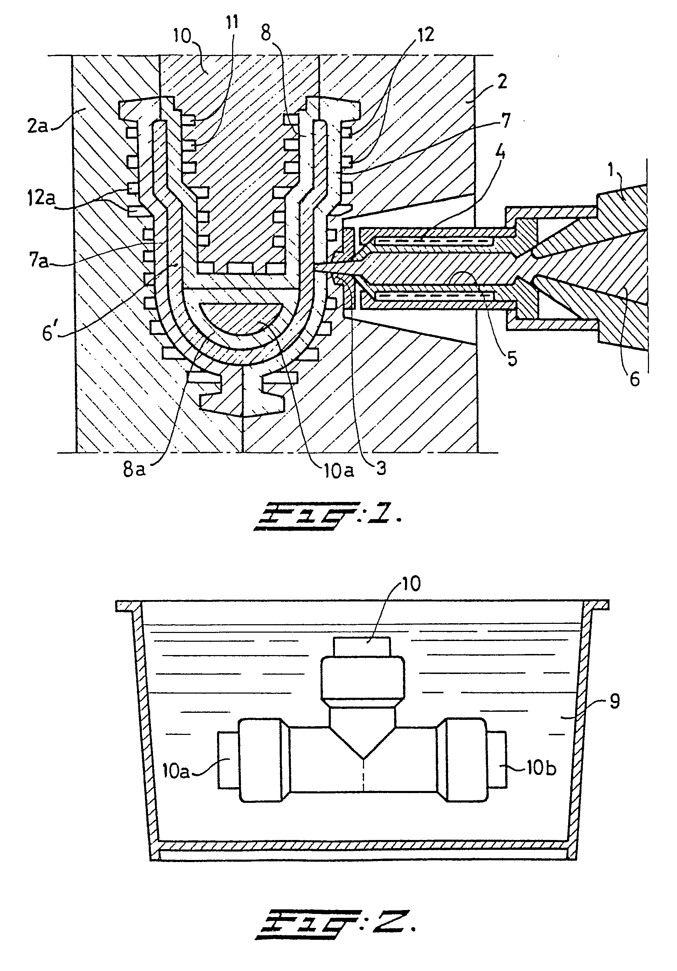

Bei dem neuen Verfahren zum Spritzgießen dickwändiger Formstücke aus Kunststoff in einer Spritzgießmatrize, wobei der Kunststoff mit geringem Druck und in sehr plastischem Zustand in die Matrizenmulde hineingeführt wird, wonach unter Handhabung der Zufuhr, der Druck während der anfangenden Kühlung des in der Formmulde vorhandenen Kunststoff etwas erhöht werden. Eine bedeutende Verbesserung wird erreicht indem das in die Formmulde der Matrize Hineinführen des Kunststoffs in drei Phasen durchgeführt wird, wobei in einer ersten Phase der Kunststoff mit höher Strömungsgeschwindigkeit in die Formmulde injektiert wird und in einer zweiten Phase die Formmulde mit Kunststoff bei niedriger Strömungsgeschwindigkeit (und niedrigem Druck) abgefüllt wird, in der Endphase des Abfüllens der Formmulde, eine dritte Phase, wird bei ganz abgefüllter Formmulde die Zufuhr des Kunststoffs in sehr plastischem Zustand beibehalten unter erhöhten aber immer noch für Spritzgießen niedrigen Druck. Die Abkühlung des Formstücks wird in dieser Phase eingeleitet. Dies wird erläutert werden anhand der Fig. 1, worin die Spritzdüse einer Spritzgießvorrichtung von der Schneckenart mit der Bezügziffer 1 angedeutet worden ist. Die Spritzgießvorrichtung ist derart eingerichtet, daß sie nach der Injektion durch Drehen der Schnecke Werkstoff im geschmolzenen Zustand abgeben kann. Die Verbindung zwischen der Spritzgießeinheit und der Matrizenmulde wird von einer Anspritzbuchse 5 gebildet, die mit Erhitzungselementen 4 versehen sein kann. In der Spritzgießeinrichtung wird Kunststoff, der mit der Schaffierung 6 angedeutet worden ist, bis in sehr plastischem Zustand erhitzt um weiter über der Einspritzbuchse 5 mit einer Temperatur, die noch gerade keine chemische Zersetzung des Kunststoffs verursacht, in die Matrizenmulde zu gelangen. Der Ertrag der Spritzgießmaschine mit der Spritzdüse 1 ist derart, daß der Werkstoff mit großer Geschwindigkeit in die Matrizenmulde hineinströmen kann. Dies ist die erste Phase der Injektion. Hierbei wird die Formmulde teilweise mit Kunststoff 6' abgefüllt, während in einer zweiten Füllphase der Kunststoff mit niedriger Strömungsgeschwindigkeit und niedrigem Druck zugeführt wird um der Kunststoff gut an die, die Formmulde umgebende Wandung andrücken lassen. Ein Nachfüllen mit Kunststoff während der Anfang der Kühlung wird durchgeführt bei einem etwas erhöhten Druck. Mit Dieser wird also die Endphase des Abfüllens der Formmulde erreicht. Zufolge der höhen Geschwindigkeit der Injektion in der Anfangsphase wird der Kunststoff der inneren Reibung zufolge sehr plastisch, sodaß keine Orientierung entsteht und Formfestigkeit gewährleistet wird. Dem Anhalten des Druckes und des Plastischhaltens des Werkstoffs in der Anspritzröhre zufolge wird einen konstanten Druck im Kern des plastischen Kunststoffs in der Formmulde beibehalten. Es bleibt eine Verbindung von flüssigem Kunststoff zwischen der Spritzvorrichtung und dem Wandungskern des Formstücks unter erhöhtem aber entsprechend niedrigem Preßdruck bis Erstarrung des Wandungskerns der Abkühlung zufolge, vorgeht. Die Abkühlung kann mittels Kühlung der Matrize in üblicher Weise durchgeführt werden und das Formstück wird zwangsmäßig nachgekühlt wie hiernach noch erläutert werden wird. Schrumpf während der Anfangsphase der Materialkühlung wird also ergänzt mit plastischem Kunststoff im Wandungskern des Formstücks bis keine Einsenkungen in den Wandoberflächen oder Schrumpfblasen im Inneren entstehen können.

Das Formstück kann hierbei nach einer ersten Kühlungsperiode aus der Matrize entfernt werden und mit einem Kühlflüssigkeit abgeschreckt werden, z. B. indem das Formstück (eventuell) zusammen mit Teilen der die Form bestimmenden Unterteile der Spritzgießmatrize aus der Matrize entfernt werden und in Kühlflüssigkeit eingetaucht werden bis der Wandungskern des Formstücks eine Temperatur erreicht hat die ungefähr der Umgebungstemperatur entspricht.

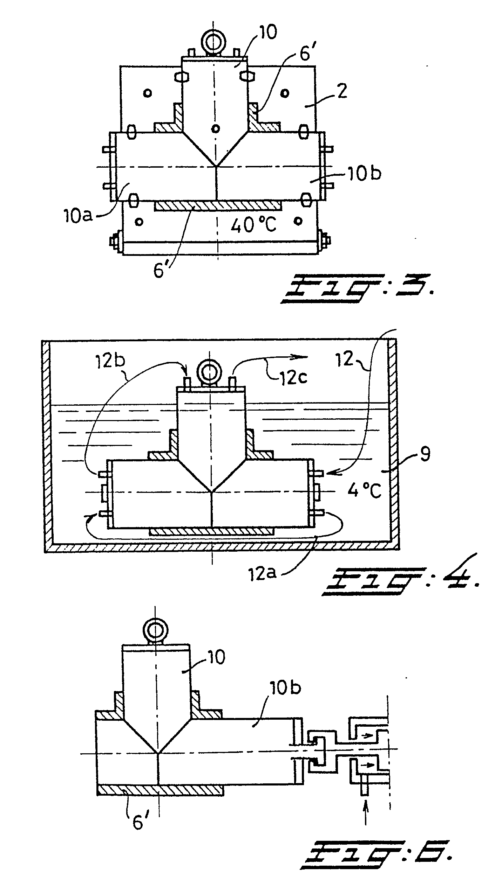

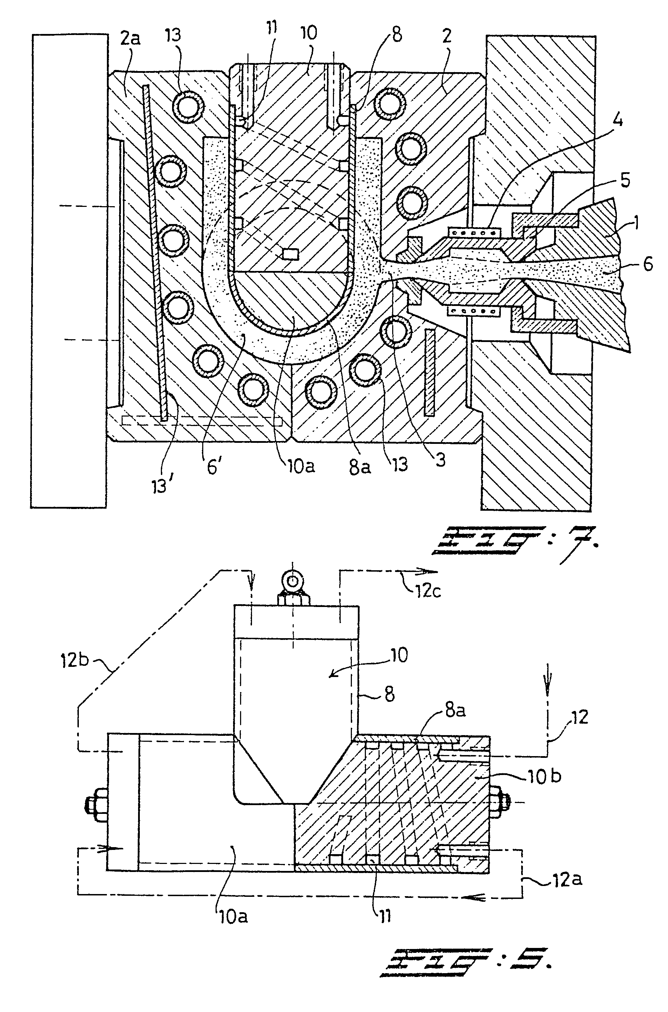

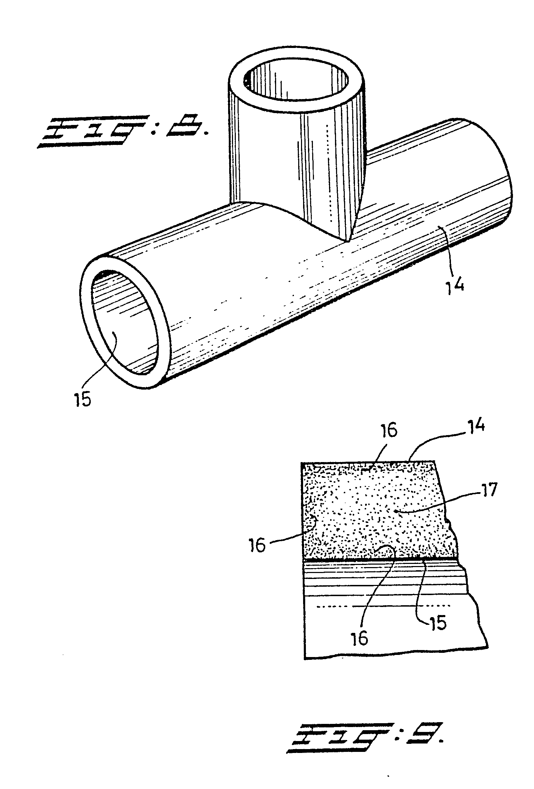

Zu diesem Zweck enthält die Formmulde der Matrize die, die Gestaltung des Formstücks bestimmende Schalenteile 7 und 7a und/oder Kernteile 8, 8a von denen wenigstens einen Teil aus der Matrize entfernbar ist zur Förderung des Formstücks ein Kühlbad 9 (Fig. 2 und 4) hinzu. Wenn die die Formmulde bestimmenden Schalenteile 7, 7a und die Kernteile 8, 8a aus einem hochwertigen Werkstoff hergestellt werden, können Diese entsprechend dünn ausgeführt sein. Somit ist es möglich die Teile schnell abzukühlen, da schon in der Matrize eine gute Kühlung auftreten kann. Es ist namentlich möglich Kühlkanäle unmittelbar hinter die Teile 7, 7a, 8 und 8a anzuordnen wie für den Matrizenkern 10 mit der Bezugziffer 11 (Fig. 1, 7) und für die Matrizenteile 2 und 2a mit den Bezugziffern 12 und 12a (Fig. 1) angedeutet worden ist. Die Kernteile können ebenfalls benutzt werden um das Formstück aus den Matrizenteilen 2, 2a heraus zu entfernen vor es ganz abgekühlt ist, wobei das Formstück auf den Teilen 8 und 8a bleibt und einer Kühlstelle außerhalb der Matrize hinzugeführt wird. Bei dieser Kühlstelle kann das Formstück sehr stark gekühlt werden, weshalb von einem Abschrecken gesprochen werden kann. Die Kernteile 10, 10a, 10b (Fig. 2, 3, 4, 5, 6) mit einem Formstück hierum werden dann unmittelbar in das Bad 9, daß z. B. mit Wasser von 4°C gefüllt ist, eingetaucht während Kühlflüssigkeit mit gleicher Temperatur durch den Kern hindurchströmt, sodaß eine völlige starke Abkühlung des Formstücks erhalten wird. Vorher wurde bei geschlossener Matrize Spritzgießstoff 6' vom Formstück vorgekühlt, z. B. bis eine Materialtemperatur von 60°C. Nachden der Wandungskern des Formstücks ungefähr die Umgebungstemperatur erreicht hat, kann das Ganze aus dem Bad 9 entfernt werden wonach die Kernteile 10, 10a und 10b aus dem Formstück herausgezogen werden, wie in Fig. 6 für einen Teil veranschaulicht ist. Während der Abkühlungszeit in dem Bad 9 kann ein zweiter Satz von Kernteilen 10, 10a und 10b in die Matrize hineingeführt werden, sodaß das Spritzgießen auch während der Abkühlung des vorhergehenden Formstücks weitergeführt werden kann. Es ist also möglich, daß Formkernteile mit ihrem inneren Leitungssystem auch in einer Lage in einer Entfernung der Matrizenhälfte am Kühlsystem der Anlage angeschlossen bleiben können, wie aus den Fig. 4 und 5 ersichtlich ist. Hierbei wird Kühlflüssigkeit mittels der Schläuche 12, 12a, 12b und 12c durch die Kanäle 11 der Kernteile 10b, 10a und 10 geführt.

Da keine höhe Preßdrucke verwendet werden, kann eine billige Matrize benutzt werden.

Wie aus Fig. 7 hervorgeht, sind die die Formmulde umschließenden Matrizenteilen 2 und 2a mit den Kernteilen 10 und 10a aus einem wärmeleitenden gießbaren Werkstoff mit einer ziemlich geringen Festigkeit hergestellt in welchem gießbaren Werkstoff eine Armierung 13, 13' eingegossen worden ist, wovon wenigstens ein Teil an die Gestaltung der Formmulde angepaßt ist. Die Matrizenteile können aus einem gegossenen wärmeleitenden Epoxyharz aber auch aus Gußaluminium hergestellt werden. Dies ist möglich da beim Spritzgießen dickwändiger Formstücke niedrige Drucke angewendet werden, weshalb auch die Schließkräfte der Matrize weniger als bei Spritzgießmaschinen für dünnwändige Formstücke üblich sind. Wenigstens einen Teil 13 der Armierung ist aus Rohrmaterial hergestellt, das für Gießen von Polyester oder Aluminium widerstandsfähig ist. Als Material können z. B. Stahlröhren verwendet werden. Der Vorteil der Verwendung von Rohrmaterial ist daß die Rohrleitungen 13 leicht um die Formmulde gebogen werden können, damit sie gerade an die Stellen liegen, wo eine schnelle und regelmäßige Kühlung der Matrize notwendig ist. Die Rohrleitungen 13 sind auch hierbei an Kühlsystem der Anlage anschließbar.

Ein Formstück nach der Erfindung wie in Fig. 8 veranschaulicht ist, hat die besondere Eigenschaft, daß die Wandungsoberfläche dieses dickwändigen Formstücks einschließlich die von den Matrizenkernteilen bestimmte innere Wandungsoberflächen eine ununterbrochene homogene Oberflächenschicht aufweisen vom gleichen Werkstoff aber mit einer feineren Kristallverteilung als die des Werkstoffs zwischen diesen Schichten. Ein Kupplungsstück nach der Erfindung kann mit Wandungsstärken größer als 6 mm, z. B. 8 mm oder mehr hergestellt werden. Zur Erläuterung dient der Schnitt nach Fig. 9, die mit einer Strukturphotographie vergleichbar ist. Der Schnitt nach Fig. 9 zeigt einen Teil des Formstücks anbei das Muffenende des in Fig. 8 dargestellten Formstücks wobei die Außenwandung 14 eine gerade und straffe Gestalt hat, genau so die innere Wandung 15 des Muffenendes. Die feinere Kristallverteilung ist hierbei mit der Bezugziffer 16 angedeutet worden und ist über die ganze Oberfläche an der Außenseite wie an der Innenseite ununterbrochen. Wegen der geraden und straffen Gestalt, z. B. der Wandungen 14 und 15, hat das Formstück nach der Erfindung die Eigenschaft, daß in achsialen Durchschnittsflächen der Formstückteile, die in dieser Durchschnittsfläche gerade Erzeugenden aufweisen, die Distanz zwischen der Erzeugende an der äußeren Seite eines Wandungsteiles und der Erzeugende an der inneren Seite dieses Wandungsteiles, z. B. von den Wandungen 14 und 15, in dieselbe Durchschnittsfläche größer als 6 mm und immer konstant ist, wobei die feinere Kristallverteilung 16 des Kunststoffs an der Oberfläche ununterbrochen den beiden Erzeugenden folgt. Auch bei gebogener Gestalt, z. B. in einem Querschnitt des Formstücks nach Fig. 8 oder bei einer gebogenen Fläche wie bei einem Krümmer, hat das Formstück nach der Erfindung die Eigenschaft daß in den Durchschnittsflächen der gebogenen Wandungsteile, deren Krümmungsradien an der äußeren und an der inneren Seite dieser Wandungsteile den gleichen Krümmungsmittelpunkt haben, die Längedifferenz dieser Krümmungsradien immer gleich und mehr als 6 mm ist, wobei die feinere Kristallverteilung des Kunststoffs an der Oberfläche immer ununterbrochen den von den beiden Krümmungsradien bestimmten Bogen folgt. Dieses ununterbrochene Folgen der Oberflächenschicht ist möglich da am Formstück nach der Erfindung keine einzige Nachbearbeitung vorgenommen werden braucht, während eine große Genauigkeit in der Maßführung innerhalb der normalen Toleranzwerten vorhanden ist. Der von der Oberflächenschicht 16 mit feinerer Kristallverteilung umgebene übrige Kunststoff 17 des Formstücks, ist ebenfalls homogen und massiv.

## Patentansprüche

1. Formstück aus thermoplastischem Kunststoff wie Polyalken insbesondere ein Kupplungsstück (Fig. 8) für thermoplastische Rohre dadurch gekennzeichnet, daß das Formstück eine im wesentlichen konstante große Wandstärke aufweist und, daß die Wandung an der inneren (15) wie an der äußeren Seite (14) eine integrierte Oberflächenschicht (16) aufweist von dem gleichen Kunststoff wie die Wandung selbst aber mit feinerer Kristallverteilung und daß diese Oberflächenschicht außer an der Einspritzstelle glatt und geschlossen ist.

2. Formstück nach Patentanspruch 1, dadurch gekennzeichnet, daß die Wandstärke wenigstens 6 mm beträgt und daß diese über dem ganzen Erzeugnis konstant ist.

3. Formstück nach den Patentansprüchen 1 und 2, dadurch gekennzeichnet, daß der von der Oberflächenschicht (16) umgebene Kunststoff (17) homogen und voll massiv ist.

4. Formstück nach einem oder mehreren der Patentansprüche 1 bis 3, dadurch gekennzeichnet, daß in achsialen Querschnittsflächen der Formstückteile die in diesen Schnittflächen geradlinig verlaufende Erzeugende aufweisen, die Distanz zwischen der Erzeugenden an der äußeren Seite (14) eines Wandungsteiles und der Erzeugenden an der inneren Seite (15) dieses Wandungsteiles in derselben Schnittfläche größer als 6 mm und immer konstant ist, wobei die feinere Kristallverteilung des Kunststoffs an der Oberfläche ununterbrochen den beiden Erzeugenden folgt.

5. Formstück nach einem oder mehreren der Patentansprüche 1 bis 4, dadurch gekennzeichnet, daß in Schnittflächen gebogener Wandteile deren Krümmungsradien an der äußeren und an der inneren Seite dieser Wandteile den gleichen Krümmungsmittelpunkt haben und der Lägenunterschied dieser Krümmungsradien immer gleich und mehr als 6 mm ist, wobei die feinere Kristallverteilung des Kunststoffs an der Oberfläche immer ununterbrochen den von den beiden Krümmungsradien bestimmten Bogen folgt.

6. Formstück nach einem oder mehreren der Patentansprüche 1 bis 5, dadurch gekennzeichnet, daß es in einem Spritzgieß- oder Fließgießmatrize hergestellt ist.

7. Verfahren zum Spritzgießen dickwändiger Formstücke aus Kunststoff in einer Spritzgießmatrize, nach einem oder mehreren der Patentansprüche 1 bis 6, wobei der Kunststoff mit geringem Druck und im plastischen Zustand in die Matrizenmulde eingespritzt wird, wonach unter Beibehaltung der Zufuhr der Druck etwas erhöht wird, während der Kühlung des in die Formmulde eingespritzten Kunststoffs, dadurch gekennzeichnet, daß das Hereinspritzen des Kunststoffs (6) in die Formmulde der Matrize (2, 2a) in drei Phasen durchgeführt wird, wobei während der ersten Phase der Kunststoff mit höher Strömungsgeschwindigkeit in die Formmulde hinein injiziert wird, während der zweiten Phase die Formmulde bei niedriger Strömungsgeschwindigkeit gefüllt wird und während einer dritten Phase bei ganz gefüllter Formmulde die Zufuhr des Kunststoffs in plastischem Zustand beibehalten wird unter höherem aber immer für Spritzgießen niedrigem Druck während das Formstück teilweise abgekühlt wird.

8. Verfahren nach dem Patentanspruch 7, dadurch gekennzeichnet, daß das Formstück nach einer ersten Kühlperiode zwischen die Matrizenhälften (2, 2a) heraus aus der Matrize entfernt und mit Kühlflüssigkeit (9) nachgekühlt wird.

9. Verfahren nach dem Patentanspruch 8, dadurch gekennzeichnet, daß das Formstück zusammen mit Teilen (10, 10a, 10b) der die Form bestimmenden Unterteile aus der Matrize entfernt wird und in eine Kühlflüssigkeit (9) eingetaucht wird bis der Wandungskern (17) des Formstücks eine Temperatur erhalten hat die ungefähr der Umgebungstemperatur entspricht.

10. Vorrichtung zur Durchführung des Verfahrens nach einem oder mehreren der Patentansprüche 7 bis 9, mit einer Spritzgießmatrize (2, 2a) und einer Spritzgießvorrichtung (1, 5) zum Erhitzen und zum Hinzuführen von Kunststoff, dadurch gekennzeichnet, daß zwischen wenigstens einer Einspritzöffnung (3) der Formmulde der Matrize und der Spritzgießvorrichtung (1) für jede Einspritzöffnung eine Einspritzbuchse (5) angeordnet ist, die einen so großen Durchmesser aufweist, oder mit Erhitzungselementen (4) versehen ist, daß der plastische Kunststoff (6) hierin erst gleichzeitig oder später als der Wandungskern (17) einfriert so damit ohne zusätzlichen hohen Druck die Formmulde bis zum Schluß gefüllt bleibt.

11. Vorrichtung nach dem Patentanspruch 10, dadurch gekennzeichnet, daß die Formmulde der Matrize die Gestaltung des Formstücks bestimmende Schalenteile (8, 8a) und/oder Kernteile (10, 10a, 10b) enthält und daß wenigstens ein Teil (10, 10a, 10b) dieser aus der Matrize entfernbar ist zur Beförderung des Formstücks einschließlich die Kernteile einem Kühlbad (9) hinzu.

12. Matrize zur Anwendung in einer Vorrichtung, nach den Patentansprüchen 10 oder 11, dadurch gekennzeichnet, daß die die Formmulde umschließenden Matrizenteile (2, 2a) aus einem wärmeleitenden gießbaren Werkstoff mit entsprechend geringer Festigkeit hergestellt sind, im welchen gießbaren Werkstoff eine Armierung (13, 13') eingegossen ist, wovon wenigstens ein Teil (13) an die Gestaltung der Formmulde angepaßt worden ist.

13. Matrize nach dem Patentanspruch 12, dadurch gekennzeichnet, daß die Matrizenteile aus einem gegossenen wärmeleitenden Polyesterepoxyharz und/oder Gußaluminium hergestellt ist.

14. Matrize nach dem Patentanspruch 12, dadurch gekennzeichnet, daß wenigstens ein Teil (13) der Armierung aus einem für Gießen beständigen Rohrmaterial hergestellt ist.

15. Matrize nach einem oder mehreren der Patentansprüche 12 bis 14, dadurch gekennzeichnet, daß die Wandung der Formmulde wenigstens teilweise mit einer Einlage (7, 7a, 8) oder Verkleidung aus einem Stoff mit größerer Festigkeit als diejenige des gegossenen Werkstoffs versehen ist.

16. Matrize nach dem Patentanspruch 15, dadurch gekennzeichnet, daß Kühlkanäle (11, 12, 12a) von der Einlage (7, 7a, 8) oder Verkleidung abgedeckt sind.

17. Matrize nach einem oder mehreren der Patentansprüche 12 bis 16, dadurch gekennzeichnet, daß wenigstens einen Teil (13) der Armierung aus Rohrleitungen besteht und als Kühlkanal ausgeführt sind.

18. Matrize nach einem oder mehreren der Patentansprüche 12 bis 17, dadurch gekennzeichnet, daß die zu den Formkernteile bestimmenden Matrizenteile (10, 10a, 10b) mit ihren inneren Kühlkanälen am Kühlkreis angeschlossen bleiben können wenn sie sich in einer Entfernung der Matrizenhälften (2, 2a) befinden.

## Claims

1. Moulded part of thermoplastic, such as polyalkene, in particular a coupling piece (Fig. 8) for thermoplastic pipes, characterized in that the moulded part has a substantially constant large wall thickness and in that the wall has on the inside (15) and on the outside (14) an integrated surface layer (16) of the same plastic as the wall itself but with finer crystal distribution and in that this surface layer is smooth and closed except at the gate mark.

2. Moulded part according to patent claim 1, characterized in that the wall thickness is at least 6 mm and in that this is constant over the entire product.

3. Moulded part according to patent claims 1 and 2, characterized in that the plastic (17) surrounded by the surface layer (16) is homogeneous and completely solid.

4. Moulded part according to one or more of patent claims 1 to 3, characterized in that, in axial cross-sectional areas of the parts of the moulded part which have straight-running generating lines in these sectional areas, the distance between the generating line on the outside (14) of a wall part and the generating line on the inside (15) of this wall part in the same sectional area is greater than 6 mm and always constant, the finer crystal distribution of the plastic at the surface following the two generating lines uninterruptedly.

5. Moulded part according to one or more of patent claims 1 to 4, characterized in that, in sectional areas of bent wall parts whose radii of curvature on the outside and on the inside of these wall parts have the same centre of curvature and the difference in length of these radii of curvature is always the same and more than 6 mm, the finer crystal distribution of the plastic at the surface always following uninterruptedly the curve determined by the two radii of curvature.

6. Moulded part according to one or more of patent claims 1 to 5, characterized in that it is produced in an injection mould or flow mould.

7. Method for injection-moulding thick-walled moulded parts from plastic in an injection mould, according to one or more of patent claims 1 to 6, the plastic being injected into the mould cavity at low pressure and in a plastic state, after which, with maintenance of the feed, the pressure is increased slightly, during the cooling of the plastic injected into the mould cavity, characterized in that the injection of the plastic (6) into the mould cavity of the mould (2, 2a) is carried out in three phases, during the first phase the plastic being injected into the mould cavity at high flow rate, during the second phase the mould cavity being filled at low flow rate and during a third phase, with completely filled mould cavity, the feed of the plastic in a plastic state being maintained with higher pressure, but still low for injection-moulding, while the moulded part is partially cooled.

8. Method according to patent claim 7, characterized in that, after a first cooling period between the mould halves (2, 2a), the moulded part is removed from the mould and post-cooled with cooling liquid (9).

9. Method according to patent claim 8, characterized in that the moulded part, together with parts (10, 10a, 10b) of the lower parts determining the shape, is removed from the mould and immersed in a cooling liquid (9) until the wall core (17) of the moulded part has attained a temperature which corresponds approximately to ambient temperature.

10. Apparatus for carrying out the method according to one or more of patent claims 7 to 9, having an injection mould (2, 2a) and an injection-moulding device (1, 5) for the heating and the feeding of plastic, characterized in that, between at least one injection opening (3) of the mould cavity of the mould and the injection-moulding device (1), an injection bush (5) is arranged for each injection opening, which injection bush has a diameter large enough, or is provided with heating elements (4), that the plastic in plastic state (6) therein only freezes at the same time or later than the wall core (17), so the mould cavity consequently remains filled right to the end without additional high pressure.

11. Apparatus according to patent claim 10, characterized in that the mould cavity of the mould includes shell parts (8, 8a) and/or core parts (10, 10a, 10b) determining the shape of the moulded part and in that at least one part (10, 10a, 10b) of these can be removed from the mould for conveying the moulded part, including the core parts, towards a cooling bath (9).

12. Mould for use in an apparatus according to patent claims 10 or 11, characterized in that the mould parts (2, 2a) surrounding the mould cavity are made from a thermally conducting, castable material of correspondingly low strength, in which castable material a reinforcement (13, 13') is cast-in, of which at least one part (13) has been adapted to the shape of the mould cavity.

13. Mould according to patent claim 12, characterized in that the mould parts are made from a cast, thermally conducting polyester epoxy resin and/or from cast aluminium.

14. Mould according to patent claim 12, characterized in that at least one part (13) of the reinforcement is made from a pipe material resistant for casting.

15. Mould according to one or more of patent claims 12 to 14, characterized in that the wall of the mould cavity is provided at least partially with a lining (7, 7a, 8) or cladding of a material of greater strength than that of the cast material.

16. Mould according to patent claim 15, characterized in that cooling channels (11, 12, 12a) are covered by the lining (7, 7a, 8) or cladding.

17. Mould according to one or more of patent claims 12 to 16, characterized in that at least on part (13) of the reinforcement consists of pipelines and is designed as a cooling channel.

18. Mould according to one or more of patent claims 12 to 17, characterized in that the mould parts (10, 10a, 10b) determining the mould core parts may remain connected by their inner cooling channels to the cooling circuit if they are at a distance from the mould halves (2, 2a).

**Revendications**

1. Pièce moulée formée d'une matière thermoplastique, telle qu'un polyalcène, et en particulier organe d'accouplement (figure 8) pour des tubes en matière thermoplastique, caractérisée en ce que la pièce moulée possède une épaisseur de paroi importante sensiblement constante, en ce que la paroi possède, au niveau de la face intérieure (15) comme au niveau de la face extérieure (14), une couche superficielle intégrée (16) formée par la même matière plastique que la paroi elle-même, mais possédant une distribution cristalline plus fine, et en ce que cette couche superficielle est lisse et fermée, en dehors du point d'injection.

2. Pièce moulée selon la revendication 1, caractérisée en ce que l'épaisseur de paroi est égale à au moins 6 mm et en ce que cette épaisseur est constante sur l'ensemble du produit.

3. Pièce moulée selon les revendications 1 et 2, caractérisée en ce que la matière plastique (17) entourée par la couche superficielle (16) est homogène et entièrement massive.

4. Pièce moulée selon une ou plusieurs des revendications 1 à 3, caractérisée en ce que dans des surfaces en coupe transversale axiale des parties de la pièce moulée, qui possèdent des génératrices rectilignes dans ces surfaces de coupe, la distance entre la génératrice sur la face extérieure (14) d'un élément de paroi et la génératrice sur la face intérieure (15) de cet élément de paroi, dans la même surface de coupe, est supérieure à 6 mm et toujours constante, la distribution cristalline plus fine de la matière plastique au niveau de la surface suivant sans discontinuité les deux génératrices.

5. Pièce moulée selon une ou plusieurs des revendications 1 à 4, caractérisée en ce que dans des surfaces de coupe d'éléments de paroi coudés, les rayons de courbure de ces éléments de paroi possèdent, au niveau de leur face extérieure et de leur face intérieure, le même centre de courbure et la différence de longueur de ces rayons de courbure est toujours identique et supérieure à 6 mm, la distribution cristalline plus fine de la matière plastique au niveau de la surface suivant toujours sans discontinuité les coudes déterminés par les deux rayons de courbure.

6. Pièce moulée selon une ou plusieurs des revendications 1 à 5, caractérisée en ce qu'elle est fabriquée dans une matrice de moulage par injection ou de moulage par coulée.

7. Procédé pour réaliser le moulage par injection de pièces moulées en matière plastique à paroi épaisse dans une matrice de moulage par injection, selon une ou plusieurs des revendications 1 à 6, et selon lequel on injecte dans la cavité de la matrice la matière plastique sous faible pression et à l'état plastique, à la suite de quoi on accroît légèrement la pression tout en continuant à amener la matière plastique, pendant le refroidissement de la matière plastique injectée dans la cavité de moulage, caractérisé en ce qu'on effectue l'introduction de la matière plastique (6) dans la cavité de moulage de la matrice (2, 2a) en trois phases, auquel cas pendant la première phase, on injecte la matière plastique dans la cavité de moulage avec une vitesse élevée d'écoulement, pendant la seconde phase on remplit la cavité de moulage avec une faible vitesse d'écoulement et pendant une troisième phase, alors que la cavité de moulage est entièrement remplie, on maintient l'apport de la matière plastique à l'état plastique tout en appliquant une pression supérieure mais toujours faible pour le moulage par injection, tandis que la pièce moulée se refroidit partiellement.

8. Procédé selon la revendication 7, caractérisé en ce qu'on retire la pièce moulée de la zone située entre les moitiés (2, 2a) de la matrice après une première période de refroidissement et on lui fait subir un refroidissement complémentaire à l'aide d'un liquide de refroidissement (9).

9. Procédé selon la revendication 8, caractérisé en ce qu'on retire de la matrice la pièce moulée conjointement avec des sous-éléments (10, 10a, 10b) définissant la forme, et on les plonge dans un liquide de refroidissement (9) jusqu'à ce que le cœur (17) de la paroi de la pièce moulée ait atteint une température correspondant approximativement à la température ambiante.

10. Dispositif pour la mise en œuvre du procédé selon une ou plusieurs des revendications 7 à 9, comportant une matrice pour moulage par injection (2, 2a) et un dispositif de moulage par injection (1, 5) servant à chauffer et à amener la matière plastique, caractérisé en ce qu'entre au moins une ouverture d'injection (3) de la cavité de moulage de la matrice et le dispositif de moulage par injection (1), se trouve disposée, pour chaque ouverture d'injection, un manchon d'injection (5) possédant une diamètre suffisamment grand ou bien équipé d'organes de chauffage (4) pour que la matière plastique (6) à l'état plastique ne durcisse qu'en même temps ou plus tardivement que le cœur (17) de la paroi de sorte qu'ainsi la cavité de moulage reste remplie jusqu'à la fin, sans l'application d'une pression élevée supplémentaire.

11. Dispositif selon la revendication 10, caractérisé en ce que la cavité de moulage de la matrice contient des éléments de coque (8, 8a) et/ou des éléments de noyau (10, 10a, 10b), qui déterminent la configuration de la pièce moulée, et en ce qu'au moins une partie (10, 10a, 10b) de ces éléments peut être retirée de la matrice pour permettre le transfert de la pièce moulée y compris des éléments de noyau, dans un bain de refroidissement (9).

12. Matrice destinée à être utilisée dans un dispositif selon les revendications 10 ou 11, caractérisée en ce que les éléments (2, 2a) de la matrice, qui entourent la cavité de moulage sont réalisés en un matériau apte à être coulé et conducteur thermique, qui possède une faible résistance mécanique correspondante et dans lequel est noyée une armature (13, 13'), dont au moins une partie (13) a été adaptée à la configuration de la cavité de moulage.

13. Matrice selon la revendication 12, caractérisée en ce que les éléments de la matrice sont réalisés en une résine polyester-époxy coulée et conductrice thermique et/ou en aluminium de coulée.

14. Matrice selon la revendication 12, caractérisée en ce qu'au moins une partie (13) de l'armature est réalisée en un matériau tubulaire apte à résister à la coulée.

15. Matrice selon une ou plusieurs des revendications 12 à 14, caractérisée en ce que la paroi de la cavité de moulage est munie au moins partiellement d'une garniture (7, 7a, 8) ou d'un revêtement formé d'un matériau présentant une résistance mécanique supérieure à celle de la matière coulée.

16. Matrice selon la revendication 15, caractérisée en ce que des canaux de refroidissement (11, 12, 12a) sont recouverts par la garniture (7, 7a, 8) ou par le revêtement.

17. Matrice selon une ou plusieurs des revendications 12 à 16, caractérisée en ce qu'au moins une partie (13) de l'armature est constituée par des canalisations tubulaires et est réalisée sous la forme de canaux de refroidissement.

18. Matrice selon une ou plusieurs des revendications 12 à 17, caractérisée en ce que les éléments (10, 10a, 10b) de la matrice, qui définissent les éléments du noyau de moulage, peuvent rester raccordés par leurs canaux intérieurs de refroidissement au circuit de refroidissement lorsqu'ils sont éloignés des moitiés (2, 2a) de la matrice.

_Fig:1._

_Fig:2._

_FIG:3._

_FIG:4._

_FIG:6._

FIG:7.

FIG:5.

FIG:8.

14

15

16   14

16

16   17

15

16

FIG:9.